# EUROPÄISCHE PATENTANMELDUNG

(11) **EP 0 562 235 A2**
(43) Veröffentlichungstag der Anmeldung: **29.09.1993**
(21) Anmeldenummer: 93101346.0
(22) Anmeldetag: 29.01.1993
(51) Int. Cl.: H04Q 3/62

(54) **Rechnergesteuerte Telekommunikationsanlage**

(30) Priorität: 25.03.1992 DE 4210167
(71) Anmelder: DETEWE - DEUTSCHE TELEPHONWERKE Aktiengesellschaft & Co., D-10997 Berlin (DE)
(72) Erfinder: Baumeister, Rolf, W-1000 Berlin 21 (DE); Dummann, Uwe, W-1000 Berlin 51 (DE); Jäckel, Horst, W-1000 Berlin 49 (DE); Körner, Günter, W-1000 Berlin 47 (DE); Ersel, Klaus-Peter, W-1000 Berlin 42 (DE); Jankowsky, Florian, W-1000 Berlin 10 (DE)

(57) **Zusammenfassung**

Für Telekommunikationsanlagen mit hybrider Rechnersteuerung mit einem Zentralrechner und verteilten Rechnern, einem Koppelnetz und peripheren Schnittstellen zum Anschluß systemeigener und nicht systemeigener Endgeräte zur Übertragung von Sprache und Daten wird vorgeschlagen, jedes Endgerät mit nur einer Zweidrahtleitung an die entsprechende Schnittstelle zu schalten und die Sprachübertragung innerhalb des Koppelnetzes vierdrähtig bidirektional und außerhalb des Koppelnetzes zweidrähtig unidirektional zu führen. Die Daten werden mittels eines Data-Over-Voice-Verfahrens und einer Gleichstromübertragung mit niedrigem Sendepegel übermittelt.

## Beschreibung

Die Erfindung betrifft eine rechnergesteuerte Telekommunikationsanlage , die einen zentralen Steuerrechner und verteilte Rechnereinheiten, ein Koppelnetz und periphere Schnittstellen für den Anschluß systemeigener und nicht systemeigener Endgeräte zur Übertragung von Sprache und Daten aufweist.

Derartige rechnergesteuerte Telekommunikationsanlagen sind bekannt. So ist z. B. in der DE 39 23 960 A1 eine Anlage beschrieben, die verteilte Rechner in den systemeigenen Endgeräten, in der Zentralsteuerung und in den Schnittstellenanpassungen für nicht systemeigene Endgeräte der herkömmlichen Anschlußtechnik, wie Standardapparate, Fernkopierer usw., sowie der Zeichengabesteuerung aufweist. Derartige Anlagen erfordern einen hohen Aufwand für die Kommunikation zwischen den einzelnen Rechnern infolge unterschiedlicher Nachrichtenstrukturen für die verschiedenen Schnittstellen. Die systemeigenen Schnittstellen benötigen einen höheren Steueraufwand, der für Zwecke der Datenübertragung, Blocksicherung, Fehlererkennung und Fehlerbehebung zusätzliche Rechner zur Abwicklung einer seriellen Signalisierungssteuerung erfordert.

Andere Telekommunikationsanlagen weisen eine Zentralsteuerung auf, bei der ein zentraler Rechner eingesetzt wird, wie z. B. nach der DE 38 23 236 A1.

Teilzentrale Steuerungen, bei denen eine dezentrale Teilsteuerung des rein digitalen Vermittlungssystems neben der Zentralsteuerung existiert und bei der die dezentrale Teilsteuerung rechnergesteuerte Speicherbereiche enthält, sind Gegenstand der DE 34 32 144 C2.

Die rein zentral gesteuerten Systeme erfordern eine hohe Rechnerleistung und demzufolge einen hohen wirtschaftlichen Aufwand.

Ausgehend von diesem Stand der Technik lag der Erfindung die Aufgabe zugrunde, für eine rechnergesteuerte Telekommunikationsanlage mit systemeigenen und nicht systemeigenen Endgeräten eine Anordnung zu schaffen, die einen geringen Rechneraufwand erfordert und die außerdem den einfachen Anschluß herkömmlicher nicht systemeigener Endgeräte auch zur Datenübermittlung gestattet.

Diese Aufgabe ist durch die Erfindung gelöst, wie sie im Kennzeichnungsteil des ersten Patentanspruches dargelegt ist. Weitere vorteilhafte Anordnungen sind Gegenstand der Unteransprüche.

Durch die Verlagerung von vermittlungstechnischen Aufgaben der nicht systemeigenen Schnittstellen werden an diesen Rechner eingespart, deren Aufgaben vom zentralen Steuerrechner aufgrund seiner nicht ausgelasteten Kapazität für die vermittlungstechnischen Aufgaben der systemeigenen Schnittstellen übernommen werden.

Anhand einer aus sechs Figuren bestehenden Zeichnung wird die Erfindung nachfolgend näher erläutert. Es zeigt die
- Fig. 1: die Steuerstruktur der Telekommunikationsanlage in Form eines Blockschaltbildes, die
- Fig. 2: das Beispiel einer Ausbaustufe einer Telekommunikationsanlage, die
- Fig. 3: schematische Darstellungen von systemeigenen Schnittstellen, die
- Fig. 4: schematische Darstellungen nicht systemeigener Schnittstellen, die
- Fig. 5: das Prinzip eines DOV-Modems für die Vierdrahtseite und die
- Fig. 6: die prinzipielle Darstellung eines Systemtelefons.

In allen Figuren tragen gleiche Bauelemente und Anschlußpunkte dieselben Bezugszeichen.

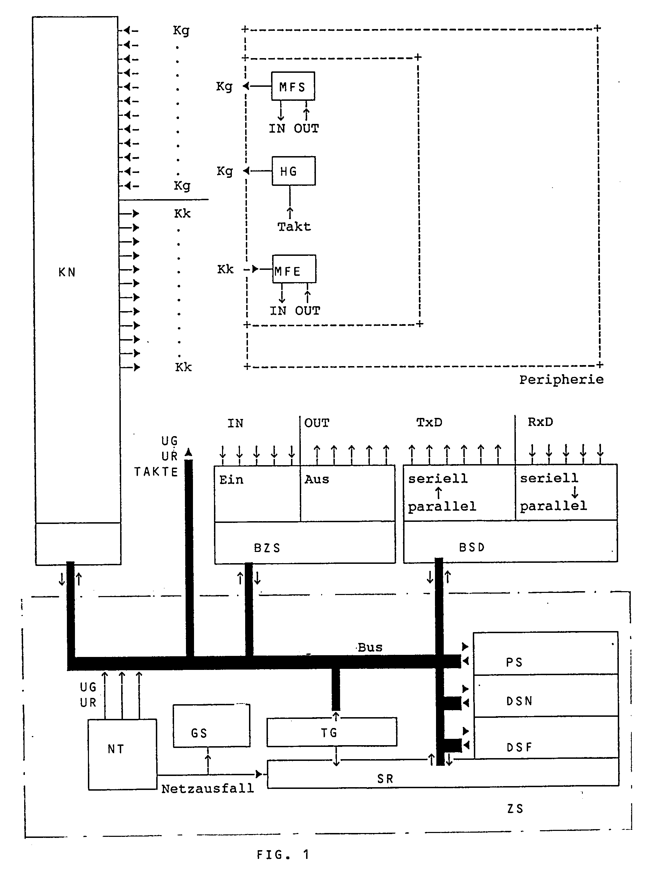

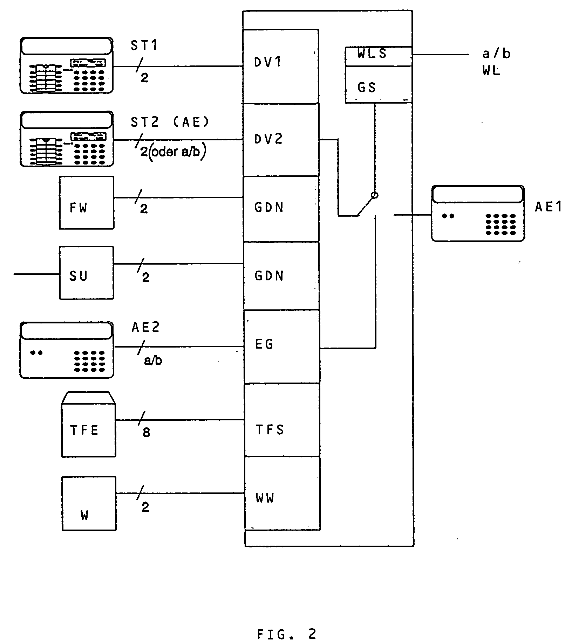

Nach der in der Fig. 1 schematisch dargestellten Steuerstruktur weist die Telekommunikationsanlage in ihrer Zentralsteuerung ZS einen Steuerrechner SR, einen Taktgeber TG sowie flüchtige und nicht flüchtige Datenspeicher DSF, DSN und Programmspeicher PS auf. Ein übliches Netzteil NT erzeugt die Speise- und Rufspannung UG, UR und gibt bei Unterschreiten eines vorgegebenen Spannungsminimums ein Netzausfallsignal an den Steuerrechner SR. Eine gekoppelte Gestörtschaltung GS schaltet im Störfall ein nicht systemeigenes Endgerät AE1 an die Anschlußleitungen a/b (Fig. 2). Über ein Sammelleitungsnetz BUS findet der Datenaustausch zwischen dem Steuerrechner SR und einem Ein-Ausgabebaustein BSD für die serielle Datenübertragung, einen Ein-Ausgabebaustein BZS für die zentrale Steuerung und dem Koppelnetz KN statt.

Der Ein-Ausgabebaustein BSD für die serielle Datenübertragung wird mittels eines seriellen Signalisierungsprotokolls gesteuert und setzt die parallele Datenübertragung vom Steuerrechner SR in eine serielle Datenübertragung um zur Steuerung der peripheren systemeigenen Schnittstellen DV1, DV2. Umgekehrt wird der serielle Datenfluß von den systemeigenen Endgeräten zum Steuerrechner SR in einen parallelen Datenfluß durch den Ein-Ausgabebaustein BSD umgewandelt. Für diese serielle Signalisierungssteuerung wird vorzugsweise ein Standard-Mikrocontroller verwendet, ein autarker Baustein der über einen Rechner und Speicher verfügt.

Der Ein-Ausgabebaustein BZS für die zentrale Steuerung dient der Datenübertragung zu den nicht systemeigenen Schnittstellen WLS, EG, TFS, WW. Für die Steuerung dieser Schnittstellen wird der Steuerrechner SR der Zentralsteuerung ZS mitverwendet.

Damit sind keine zusätzlichen Rechner für die nicht systemeigenen Schnittstellen erforderlich. Als Steuerrechner SR können zudem wirtschaftliche Standard-Mikroprozessoren eingesetzt werden.

An zentraler Stelle der Peripherie sind die Sender und Empfänger für das Mehrfrequenzwahlverfahren MFS, MFE und die Hörtongeneratoren HG angeordnet, die an die gehenden Kg bzw. kommenden Ein- bzw. Ausgänge Kk des Koppelnetzes KN geschaltet werden.

Das Koppelnetz KN besteht aus digital angesteuerten elektronischen Schaltelementen, z. B. Analogschaltern. Die Durchschaltung wird vierdrähtig, also unidirektional im Koppelnetz KN kommend und gehend, vorgenommen. Nach außen ist die Durchschaltung zweidrähtig, also bidirektional. Diese gerichtete Übertragung im System ermöglicht beispielsweise die Einspeisung von Hörtönen zu einem Teilnehmer während einer bestehenden Verbindung.

Durch die entsprechende Anschaltung von zentralen Elementen, wie das Koppelfeld KN und die Port-/Interruptleitungen des EinAusgabebausteines BZS für die zentrale Steuerung, und dezentralen Elementen, wie die serielle Signalisierungssteuerung des Ein-Ausgabebausteines für die serielle Datenübertragung BSD, an das Sammelleitungsnetz BUS und die zugeordnete Anschaltung von systemeigenen und nicht systemeigenen Schnittstellen sind die Ausbaustufen beliebig festlegbar.

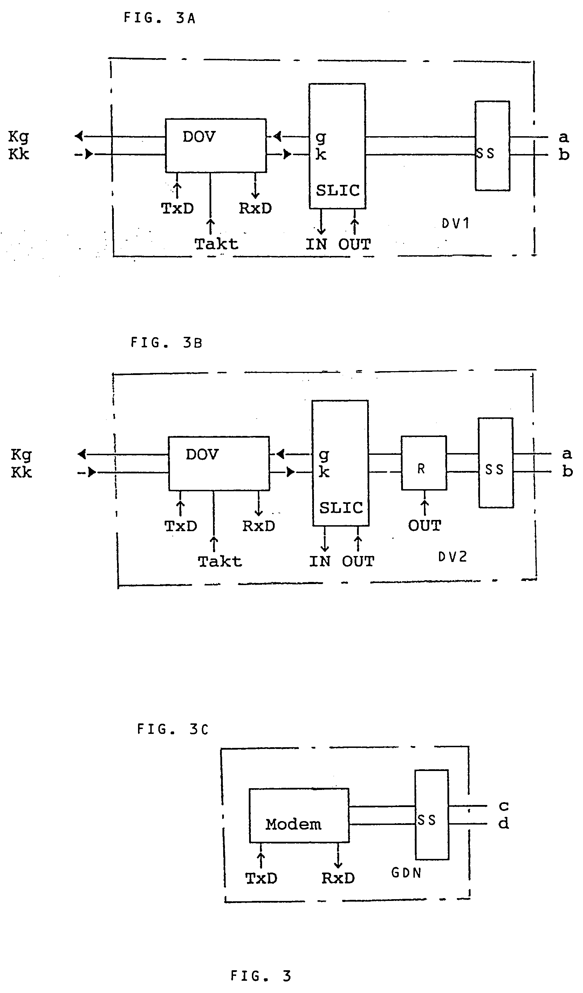

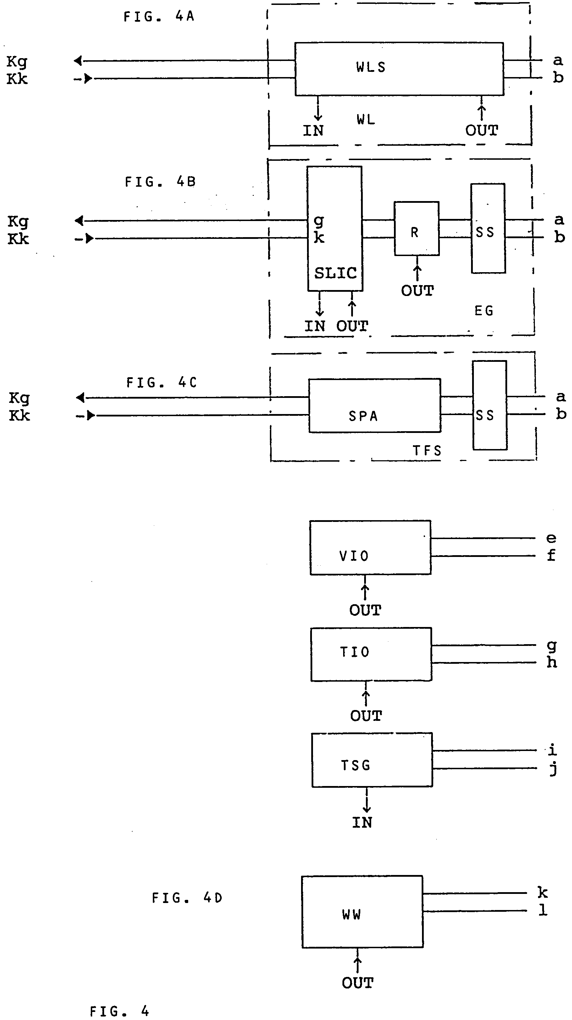

Die Fig. 2 zeigt ein Beispiel einer Telekommunikationsanlage mit hybrider Rechnersteuerung. Hierin sind über systemeigene und nicht systemeigene Schnittstellen die Endgeräte jeweils nur zweidrähtig angeschlossen. Im Beispiel sind zwei systemeigene Telefone ST1, ST2 und ein nicht systemeigenes Endgerät AE2, eine Anschlußdose für das Fernwirken FW, ein Schnittstellenumsetzer SU, eine Türfreisprecheinrichtung TFE und ein Zusatzwecker W vorgesehen. Die verschiedenen Schnittstellen sind in den Fig. 3 und 4 gezeigt. Die systemeigenen Schnittstellen DV1, DV2 und GDN werden über beide Ein-Ausgabebausteine BSD, BZS, die nicht systemeigenen Schnittstellen WLS, EG, TFS, und WW ausschließlich über den Ein-Ausgabebaustein für die Zentralsteuerung BZS aktiviert oder deaktiviert.

Die systemeigenen Schnittstellen DV1, DV2, GDN sind zum Anschluß von Systemtelefonen ST vorgesehen, die nach einem Data-Over-Voice-Verfahren (DOV) arbeiten, und für den Anschluß von Endgeräten für Datenanwendungen, die ein Verfahren für eine Gleichstromdatenübertragung mit niedrigem Sendepegel (GDN) nutzen. Es besteht zudem die Möglichkeit, mittels einer Universalschnittstelle DV2 ein nicht systemeigenes Endgerät, z.B. ein Fernsprechendgerät, ein Faksimilegerät, ein Bildschirmtextgerät usw., anzuschließen.

Die systemeigenen Schnittstellen DV1 und DV2 nach Fig. 3A und 3B unterscheiden sich lediglich in der zusätzlichen Rufeinschleifung für nicht systemeigene Endgeräte. Sie sind jeweils aus einem taktgesteuerten Modem DOV, einen Baustein SLIC zum Anschluß analoger Teilnehmer an digitale Systeme, der eine Zweidraht-/Vierdrahtumsetzung, die Speisung, die Ruf-, Ton- und Gebühreneinspeisung, eine komplexe Leitungsnachbildung und die Schleifenüberwachung umfaßt, sowie einer Schutzschaltung SS zusammengesetzt.

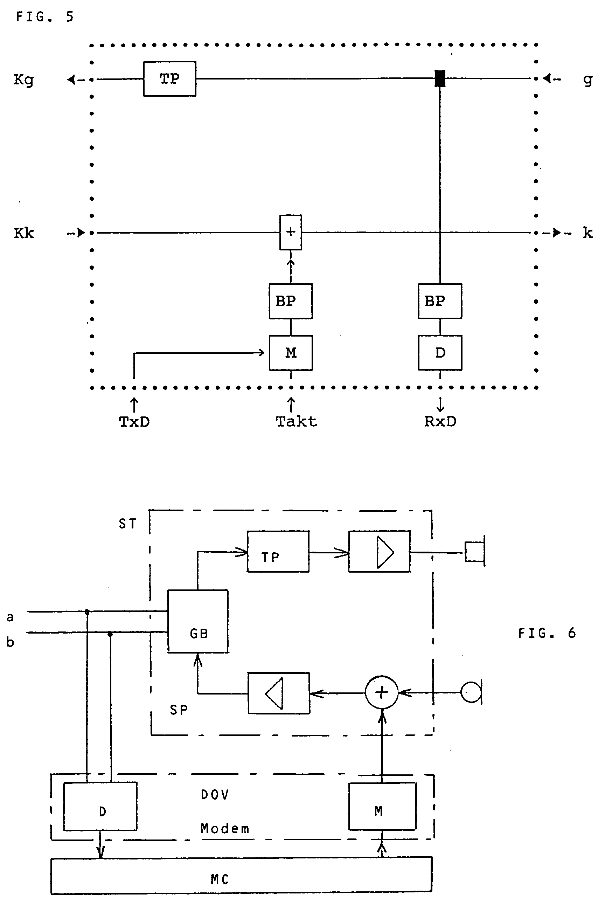

Das Modem DOV gestattet über eine zweidrähtige Leitung sowohl die Speisung der Systemtelefone ST1,ST2 als auch die gleichzeitige Übertragung von Sprache und Daten. Die Sprache wird im niedrigen Frequenzbereich, typisch 300...3400 Hz, und die Daten werden in einem höheren Frequenzbereich. z.B. 32 kHz, gleichzeitig übertragen. Eine Beeinträchtigung oder Unterbrechung der Sprache ist nicht gegeben. Es kann ein Modem DOV auf der Zweidrahtseite oder auf der Vierdrahtseite eingesetzt werden. Ein Prinzipschaltbild eines Modems DOV für die Vierdrahtseite zeigt die Fig. 5. Daraus ist erkennbar, daß dem Modulator M und dem Demodulator D jeweils ein Bandpaß BP zugeordnet sind und ein Tiefpaß TP das Durchgreifen der höheren Frequenzen auf das Koppelnetz KN verhindert, z. B. auf die Anschlußleitungen a/b zum öffentlichen Fernsprechnetz.

Aus der Fig. 6 ist das Beispiel eines Zweidrahtmodemanschlusses an die Sprechschaltung eines Endgerätes ersichtlich, wobei ein weiterer Tiefpaß TP das Durchgreifen der höheren Frequenzen auf die Hörkapsel unterbindet.

Die systemeigene Schnittstelle GDN nach Fig. 3C erlaubt die Anschaltung von Zusatzeinrichtungen an die Telekommunikationsanlage mit hybrider Rechnersteuerung. So z. B. eine Anschlußdose für das Fernwirken FW, die mittels Aktoren ein Fernschalten und mittels Sensoren ein Fernmelden gestattet. Oder den Anschluß von Schnittstellenumsetzern SU, die eine systemeigene Schnittstelle in eine Standardschnittstelle umsetzen, z. B. eine V-Schnittstelle zur Anschaltung von Personalcomputern oder Gebührendruckern. Die Schnittstelle GDN übernimmt über eine Zweidrahtleitung c, d die Speisung der Zusatzeinrichtungen und die Datenübertragung.

Die nicht systemeigenen Schnittstellen nach Fig. 4 dienen dem Anschluß von z. B. Wählleitungen WL (Fig. 4A), die praktisch aus einem Wählleitungssatz WLS bestehen, der einen teilnehmergleichen Anschluß von Amtsleitungen für Hauptanschlußkennzeichen gestattet.

Die Endgeräteschnittstelle EG (Fig. 4B) ermöglicht den Anschluß von nicht systemeigenen Fernsprechendgeräten, Faksimilegeräten, Bildschirmtextgeräten usw. Sie besteht aus einem Baustein SLIC zum Anschluß analoger Endgeräte an digitale Systeme, einer Rufanschaltung R und einer Schutzschaltung SS.

Eine Schnittstelle für eine Türfreisprecheinrichtung TFS (Fig. 4C) enthält eine Sprechwegeanpassung SPA und eine Schutzschaltung SS. Ihr können Zusatzeinrichtungen zugeordnet werden, wie eine Schaltvorrichtung VIO zum Ein- oder Ausschalten eines Verstärkers der Türsprecheinrichtung TFE, eine Schaltvorrichtung TIO zum Ein- oder Ausschalten eines Türöffners und eine Türsignalmeldung TSG, die jeweils über eigene Zeichengabeleitungen e...j verfügen.

Schließlich ist eine Schnittstelle WW für die Zu- oder Abschaltung eines Zusatzweckers über zwei Leitungen k, l vorgesehen.

Die vorzugsweise als Endgeräte verwendeten Systemtelefone ST (Fig. 6) enthalten jeweils einen Mikrocontroller MC, der für die Tastatur- und Gabelumschalterabfrage, die Displaysteuerung, die Tonruferzeugung und die Sprechwegesteuerung eingesetzt wird. Außerdem verarbeitet er die zwischen dem Systemtelefon ST und der Telekommunikationsanlage auszutauschenden Datentelegramme, wie weiter unten näher erläutert wird. Eine Sprechschaltung SP bildet jeweils den a/b-Leitungsabschluß und steuert die Zweidraht-/Vierdrahtwandlung über die Gabelschaltung und die Verstärkung der Sende- und Empfangssignale. Über schaltbare Sprechwege ist die Sprechschaltung mit Handapparat und einer Lauthör- oder einer Freisprecheinrichtung mit Lauthörmöglichkeit verbunden. An die Sprechwegeschaltung SP ist ein DOV-Modem geschaltet. Im Sendeweg werden das Sprachsignal und das modulierte Daten-telegramm summiert und über denselben Verstärker auf die a/b-Leitungen gegeben.

Das Datentelegramm der Empfangseinrichtung wird direkt von den a/b-Leitungen abgegriffen und demoduliert. Auf diese Weise kann das vom Systemtelefon ST gesendete Datentelegramm wieder empfangen und auf Kollision mit einem gleichzeitig gesendeten anderen Datentelegramm geprüft werden.

Die Daten werden asynchron im Halbduplexverfahren in Form von Datentelegrammen übertragen. Die Systemtelefone sind, wie bereits beschrieben, in der Lage Kollisionen zu erkennen. Bei einer Kollision setzt sich die Telekommunikationsanlage durch, d. h. das entsprechende Systemtelefon bricht die Datenverarbeitung ab. Die Daten werden blockgesichert übertragen, so daß Fehler auf der Übertragungsstrecke erkennbar sind. Eine erfolgreiche Übertragung wird quittiert.

Die Systemtelefone sind sogenannte Stimulus-Endgeräte, d. h. es werden nur dann Daten zur Telekommunikationsanlage übertragen, wenn eine Veränderung der Handapparatestellung oder der Tasten aktiviert wird. Sämtliche andere Funktionen der Systemtelefone werden von der Telekommunikationsanlage gesteuert, wie z. B. die Sprechwegedurchschaltung, das Freisprechmikrofon, die Lauthöreinrichtung, das Anruforgan, die optischen Anzeigen usw. Das Display ergänzt die Benutzerführung zusätzlich zu den Hörtönen, wie Besetzt-, Frei- und Wählton durch Texthinweise. Die Texte sind dabei im allgemeinen in einem Speicher der Systemtelefone abgelegt, die dementsprechend über ein- oder mehrzeilige Displays verfügen, wobei das ganze Display oder einzelne Zeilen über den Steuerrechner SR ansteuerbar sind. Weiterhin besteht die Möglichkeit, variable Anteile eines im Systemtelefon abgespeicherten Textes zu ergänzen oder auch neue Texte zu speichern. Der Vorteil dieses Verfahrens besteht darin, daß nicht ein kompletter Text zum Systemtelefon übertragen werden muß, sondern nur eine Textnummer. Bei einem 16-stelligen Display und bei einer alphanumerischen Anzeigemöglichkeit, bei der jede Stelle einem Byte entspricht, kann mit einer Textnummer die Belastung der Übertragungsstrecke auf maximal 1/16 gegenüber der Übertragung des kompletten Textes reduziert werden, wobei ein Byte 256 Textnummern entspricht. Ein weiterer Vorteil ist die Anpassung der Texte an ausländische Märkte, die allein im Systemtelefon vorzunehmen ist.

## Patentansprüche

1. Rechnergesteuerte Telekommunikationsanlage, die einen zentralen Steuerrechner und verteilte Rechnereinheiten, ein Koppelnetz und periphere Schnittstellen für den Anschluß systemeigener und nicht systemeigener Endgeräte zur Übertragung von Sprache und Daten aufweist, dadurch gekennzeichnet,
daß die Telekommunikationsanlage eine hybride Rechnersteuerung aufweist und daß jedes Endgerät zweidrähtig über eine eigene Schnittstelle angeschaltet wird,
daß die Sprachübertragung im Koppelnetz (KN) bei vierdrähtiger Durchschaltung unidirektional, außerhalb des Koppelnetzes (KN) bei zweidrähtiger Durchschaltung bidirektional durchgeführt wird,
daß zur Datenübertragung den systemeigenen Endgeräte (ST..) und deren Schnittstellen (DV1, DV2, GDN) Modems (DOV) zugeordnet werden, die die Daten in einen höheren Frequenzbereich als den Sprachbereich umsetzen,
daß die Steuerung der systemeigenen Endgeräte (ST..) sowie Zusatzeinrichtungen (FW, SU) und deren Schnittstellen (DV1, DV2, GDN) über den Steuerrechner (SR) und periphere Rechner eines Ein-Ausgabebausteines (BSD) für serielle Datenverarbeitung vorgenommen wird und
daß die Steuerung nicht systemeigener Endgeräte (AE2, TFE, W) und deren Schnittstellen (WL, EG, TFS, WW) ausschließlich durch den Steuerrechner (SR) kontrolliert wird.

2. Telekommunikationsanlage nach Anspruch 1, dadurch gekennzeichnet, daß eine Universalschnittstelle (DV2) den Anschluß systemeigener und nicht systemeigener Endgeräte (ST, AE) gestattet.

3. Telekommunikationsanlage nach Anspruch 1, dadurch gekennzeichnet, daß die Daten asynchron im Halbduplexverfahren in Form von Datentelegrammen übertragen werden.

4. Telekommunikationsanlage nach Anspruch 1, dadurch gekennzeichnet, daß als systemeigene Endgeräte (ST..) Stimulus-Endgeräte verwendet werden, deren Funktionen größtenteils durch die Telekommunikationsanlage gesteuert werden.

5. Telekommunikationsanlage nach Anspruch 1 und 4, dadurch gekennzeichnet, daß zur Benutzerführung zusätzlich zu der Signalisierung durch Hörtöne Texthinweise auf Displays der systemeigenen Endgeräte (ST..) gegeben werden, die in den Endgeräten (ST..) gespeichert sind und durch den Steuerrechner (SR) aufgerufen werden.

6. Telekommunikationsanlage nach Anspruch 4 und 5, dadurch gekennzeichnet, daß gespeicherte variable Texteanteile im systemeigenen Endgerät (ST..) durch den Steuerrechner (SR) ergänzt werden.

7. Telekommunikationsanlage nach Anspruch 4 bis 6, dadurch gekennzeichnet, daß die Texte durch Senden von Textnummern aufgerufen werden.

8. Anordnung in Telekommunikationsanlagen nach Anspruch 1, dadurch gekennzeichnet, daß die Schnittstellen (DV1, DV2) für den Anschluß systemeigener Endgeräte (ST..) und die Schnittstelle (EG) zum Anschluß nicht systemeigener Geräte (AE) jeweils einen vom Steuerrechner (SR) kontrollierten Baustein (SLIC) zum Anschluß analoger Endgeräte an digitale Systeme und eine Schutzschaltung (SS) aufweisen.

9. Anordnung in Telekommunikationsanlagen nach Anspruch 1, dadurch gekennzeichnet, daß die Modems (DOV) der systemeigenen Schnittstellen (DV1, DV2, GDN) an den Baustein (BSD) für serielle Datenübertragung geschaltet sind.

10. Anordnung in Telekommunikationsanlagen nach Anspruch 1, dadurch gekennzeichnet, daß für den Anschluß systemeigener Zusatzeinrichtungen, wie das Fernwirken (FW) und die Schnittstellenumsetzung (SU), eine Schnittstelle für Datenanwendungen (GDN) eingesetzt ist, die eine Gleichstrom-Datenübertragung mit niedrigem Sendepegel und die Speisung der Zusatzeinrichtungen (FW, SU) über eine Zweidrahtleitung gestattet.
